# EUROPEAN PATENT APPLICATION

(11) **EP 4 628 629 A2**
(43) Date of publication of application: **08.10.2025**
(21) Application number: 25165223.6
(22) Date of filing: 21.03.2025
(51) Int. Cl.: C25B 1/04, C25B 9/65, C25B 9/67, C25B 9/75, C25B 9/77

(54) **ELECTROLYTIC UNIT AND ELECTROLYTIC STACK**

(30) Priority: 01.04.2024 CN 202420658401 U
(71) Applicant: Robert Bosch GmbH, 70442 Stuttgart (DE)
(72) Inventor: Hao, Xiaogang, Shanghai, 200335 (CN); XIE, Xu, Shanghai, 200335 (CN)

(57) **Abstract**

The present application provides an electrolytic unit, comprising: a plate having a first side and a second side opposite each other, the first side being an anode side, and the second side being a cathode side; an anode porous transport layer and a cathode porous transport layer respectively disposed at the first side and the second side; an exchange membrane; an anode catalyst layer and a cathode catalyst layer respectively disposed at two sides of the exchange membrane; an anode gas diffusion electrode positioned on the anode catalyst layer; and a cathode gas diffusion electrode positioned on the cathode catalyst layer; wherein the cathode porous transport layer, the plate and the anode porous transport layer are formed as an integral mechanical portion, and the anode gas diffusion electrode, the anode catalyst layer, the exchange membrane, the cathode catalyst layer and the cathode gas diffusion electrode are formed as an integral electrochemical portion. The present application also provides an electrolytic stack comprising the electrolytic unit described above. The technical solutions of the present application facilitate the assembly and maintenance of the electrolytic unit and the electrolytic stack.

## Description

### Technical Field

The present application relates to the field of electrochemical batteries, in particular to an electrolytic unit and an electrolytic stack comprising the electrolytic unit.

### Background Art

With the development of new energy technologies, hydrogen energy has received increasing attention as a centralized renewable energy carrier due to its zero pollution, high energy and wide-range of sources. There are many ways to produce hydrogen, among which the use of electrolytic stacks to produce hydrogen has become a research hotspot in the field of hydrogen production.

The electrolytic stack typically includes a plurality of electrolytic units stacked together, an end plate for securing the plurality of electrolytic units together, and tubing and lines for supplying water (or basic solutions), coolants, and power to the plurality of electrolytic units, etc. Each electrolytic unit typically includes an anode plate, an anode porous transport layer, an anode gas diffusion electrode, an anode catalyst layer, an exchange membrane (e.g., a proton exchange membrane PEM or an anion exchange membrane AEM), a cathode catalyst layer, a cathode gas diffusion electrode, a cathode porous transport layer, and a cathode plate stacked in this order (the anode plate and the cathode plate may be formed as bipolar plates or monopole plates). In the manufacturing process, the stacking of the electrolytic units is time consuming and prone to assembly errors, such as misalignment, deformation, and excessive stress, resulting in low production efficiency and quality issues.

In addition, the various components of the electrolytic unit have different characteristics. For example, the anode plate, the anode porous transport layer, the cathode plate, and the cathode porous transport layer are generally tighter and rigid, and are therefore less prone to damage. As a result, they can be used throughout the service life of the electrolytic unit (e.g., up to 120 thousand hours). In contrast, the anode gas diffusion electrode, the anode catalyst layer, the exchange membrane, the cathode catalyst layer, and the cathode gas diffusion electrode are generally fragile and flexible, and are therefore easily damaged or disabled, requiring replacement and repair. However, the electrolytic unit and the electrolytic stack produced through the above-mentioned manufacturing process are difficult to disassemble and reassemble, and may cause the electrolytic unit to fail directly or require high maintenance costs during the maintenance process.

Therefore, there is a need to improve the existing electrolytic stack and the electrolytic unit thereof to facilitate assembly and maintenance.

### Summary of Utility Model

An object of the present application is to present an improved electrolytic unit and an electrolytic stack comprising the electrolytic unit to overcome at least one of the above-described technical problems.

To this end, according to one aspect of the present application, an electrolytic unit is provided, comprising: a plate having a first side and a second side opposite each other, the first side being an anode side, and the second side being a cathode side; an anode porous transport layer and a cathode porous transport layer respectively disposed at the first side and the second side; an exchange membrane; an anode catalyst layer and a cathode catalyst layer respectively disposed at two sides of the exchange membrane; an anode gas diffusion electrode positioned on the anode catalyst layer; and a cathode gas diffusion electrode positioned on the cathode catalyst layer; wherein the cathode porous transport layer, the plate and the anode porous transport layer are formed as an integral mechanical portion, and the anode gas diffusion electrode, the anode catalyst layer, the exchange membrane, the cathode catalyst layer and the cathode gas diffusion electrode are formed as an integral electrochemical portion.

According to an example of the present application, the mechanical portion is maintained integral by a rubber piece formed around a perimeter of each of the cathode porous transport layer, the plate, and the anode porous transport layer.

According to an example of the present application, the electrochemical portion is maintained integral by a sealing gasket formed around a perimeter of each of the anode gas diffusion electrode, the anode catalyst layer, the exchange membrane, the cathode catalyst layer, and the cathode gas diffusion electrode.

According to an example of the present application, the rubber piece is formed by injection molding at the perimeter by any of ethylene propylene diene monomer rubber, silicone rubber, fluororubber, and chloroprene rubber.

According to an example of the present application, the mechanical portion and the electrochemical portion are configured to be capable of being adjacent to each other such that the anode porous transport layer of the mechanical portion is in contact with the anode gas diffusion electrode of the electrochemical portion, or such that the cathode porous transport layer of the mechanical portion is in contact with the cathode gas diffusion electrode of the electrochemical portion.

According to an example of the present application, the plate is disposed as a bipolar plate comprising an anode plate and a cathode plate disposed adjacent to each other, a coolant channel formed between the anode plate and the cathode plate.

According to an example of the present application, the sealing gasket includes a first sub-sealing gasket and a second sub-sealing gasket disposed on two sides of the exchange membrane, respectively, and the first sub-sealing gasket and the second sub-sealing gasket are in contact with each other or formed integrally with each other.

According to an example of the present application, the exchange membrane is a proton exchange membrane or an anion exchange membrane.

According to another aspect of the present application, there is provided an electrolytic stack, comprising: a plurality of electrolytic units according to any one of claims arranged adjacently; a first end plate and a second end plate, the first end plate and the second end plate configured to clamp the plurality of the electrolytic units together such that the mechanical portion of one of the two electrolytic units arranged adjacently is in contact with the electrochemical portion of the other of the two electrolytic units.

According to an example of the present application, the first end plate is provided with one or more of inlets for supplying water or a basic solution to the cathode side and the anode side of the electrolytic unit, respectively, a coolant inlet for supplying a coolant to the coolant channel of the electrolytic unit, a hydrogen outlet for discharging hydrogen gas generated on the cathode side of the electrolytic unit, an oxygen outlet for discharging oxygen gas generated on the anode side of the electrolytic unit, and a coolant outlet for discharging the coolant.

According to the technical solution of the present application, the mechanical and electrochemical portions of the electrolytic unit respectively form an integral component, which is convenient for assembly and disassembly of the electrolytic unit, especially for replacement of the electrochemical portion, thereby improving the manufacturability, maintenance, reliability and cost-efficiency of the electrolytic unit and the electrolytic stack.

### Description of Accompanying Drawings

The exemplary examples of the present application will be described in detail below with reference to the accompanying drawings. It should be understood that the examples described below are for the purpose of interpreting the present application only, and not for limiting the scope of the present application, in the appended drawings:
FIG. 1 is a schematic cross-sectional view of an electrolytic stack according to an example of the present application;
FIG. 2 is a schematic cross-sectional view of a mechanical portion of an electrolytic unit in the electrolytic stack shown in FIG. 1;
FIG. 3 is a schematic cross-sectional view of an electrochemical portion of the electrolytic unit in the electrolytic stack shown in FIG. 1.

### Specific Embodiments

Preferred examples of the present application are described in detail below in conjunction with the examples. Those skilled in the art will understand that these exemplary examples do not imply any limitation to the present application. Furthermore, features in the examples of the present application may be combined with each other, provided there is no conflict. In the various figures, the same components are indicated by the same reference signs, and other components are omitted for simplicity. However, this does not mean that the electrolytic unit and the electrolytic stack of the present application cannot include other components. It should be understood that the dimensions, proportional relationships, and the number of components shown in the drawings are not to be considered as limitations on the present application.

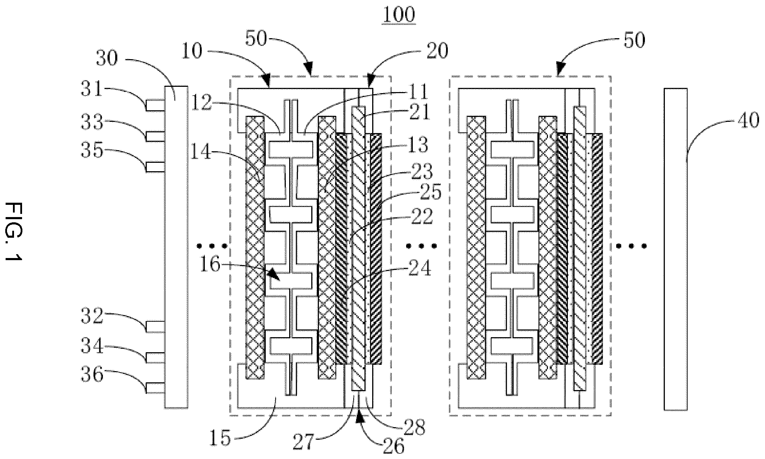

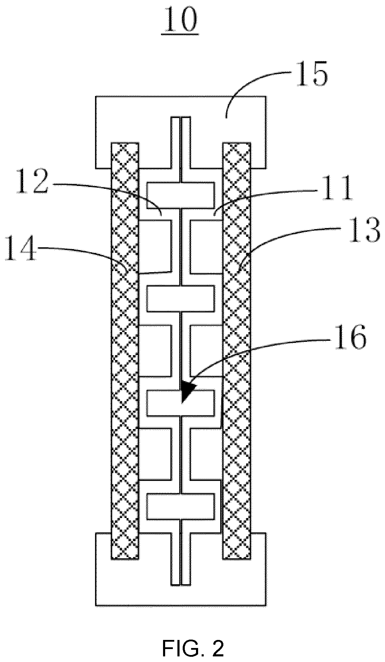

An electrolytic stack according to an example of the present application is described below with reference to FIG. 1. As shown in FIG. 1, an electrolytic stack 100 includes a plurality of electrolytic units 50 arranged adjacently (only two are shown as examples in FIG. 1), and a first end plate 30 and a second end plate 40 respectively disposed on two ends of the plurality of electrolytic units 50. The first end plate 30 and the second end plate 40 are configured to clamp the plurality of electrolytic units 50 together. As shown in FIG. 1, the first end plate 30 is provided with inlets 31, 33 for supplying water (or other solutions, e.g., basic solutions) to the cathode side and the anode side of the electrolytic unit 50, respectively, a coolant inlet 35 for supplying a coolant to the coolant channel 16 (see FIG. 2) of the electrolytic unit 50, a hydrogen outlet 32 for discharging hydrogen gas generated on the cathode side of the electrolytic unit 50, an oxygen outlet 34 for discharging oxygen gas (or other gases) generated on the anode side of the electrolytic unit 50, and a coolant outlet 36 for discharging the coolant. It should be noted that the various ports described above may also be provided on the second end plate 40, or on the first end plate 30 and the second end plate 40. In addition, the lines and tubing used to supply power, water (or other solutions), and coolants to the electrolytic unit 50 can adopt configurations and structures in the prior art, so they are not described in detail herein.

As shown in FIG. 1, the electrolytic unit 50 includes a bipolar plate and an anode porous transport layer 13 and a cathode porous transport layer 14 respectively disposed on two sides of the bipolar plate, wherein the bipolar plate includes an anode plate 11 and a cathode plate 12 disposed adjacent to each other. The anode plate 11 is in contact with the anode porous transport layer 13 and the cathode plate 12 is in contact with the cathode porous transport layer 14. The anode plate 11 and the cathode plate 12 may be stamped metal plates, composite plates, etc., and may be joined together by, for example, welding, bonding, etc. to form a bipolar plate. A groove may be formed on the surface of each of the anode plate 11 and the cathode plate 12 to form a flow field that facilitates fluid flow. A coolant channel 16 may be formed between the anode plate 11 and the cathode plate 12. Various ports may be provided at the ends or sides of the anode plate 11 and the cathode plate 12 to communicate with the aforementioned ports used to supply water and coolants to the electrolytic unit 50. The anode porous transport layer 13 and the cathode porous transport layer 14 may be metal grids, metal foams, or other porous conductive materials (e.g., aluminum, nickel or alloys thereof, titanium or alloys thereof, stainless steel, carbon or graphite, etc.) that typically have a grid size or pore size less than 1 mm, in order to increase the area of contact with water, thereby increasing hydrogen production efficiency.

It should be noted that although a bipolar plate is described in the present application as an example, the anode plate 11 and the cathode plate 12 may also be formed as an integral monopole plate, and the principles of the present application are equally applicable. For example, a monopole plate may be a metal plate, composite plate, etc. made by stamping, and grooves used to form flow fields are stamped out on both sides . In this instance, the monopole plate has a first side and a second side opposite each other, the first side being an anode side (i.e., corresponding to the anode plate 11) and the second side being a cathode side (i.e., corresponding to the cathode plate 12). The anode porous transport layer 13 and the cathode porous transport layer 14 are disposed on the first side and the second side of the monopole plate, respectively, and are in contact with the monopole plate. In summary, the bipolar plate and the monopole plate described above may be collectively referred to as a plate. Since the plate is a commonly used component in electrochemical cell systems, no further detailed description is provided herein.

As shown in FIG. 1, the electrolytic unit 50 also includes an exchange membrane 21, an anode catalyst layer 22 and a cathode catalyst layer 23 disposed on two sides of the exchange membrane 21, an anode gas diffusion electrode 24 positioned on the anode catalyst layer 22, and a cathode gas diffusion electrode 25 positioned on the cathode catalyst layer 23. The exchange membrane 21 may be a proton exchange membrane or an anion exchange membrane. Water or basic solutions, etc. may be filled in the electrolytic unit 50, and the generated gas is not limited to hydrogen and oxygen. For example, in an electrolytic unit where the exchange membrane 21 is a proton exchange membrane, purified water may be filled, while in an electrolytic unit where the exchange membrane 21 is an anion exchange membrane, a basic solution (or purified water) may be filled. The anode catalyst layer 22 and the cathode agent layer 23 are generally coated on two sides of the exchange membrane 21 and formed integral with the exchange membrane 21, so the exchange membrane 21 coated with the catalyst layer on both sides may also be referred to as a catalyst coated membrane. The anode gas diffusion electrode 24 and the cathode diffusion electrode 25 may have a conductive porous film structure, although the present application is not limited thereto.

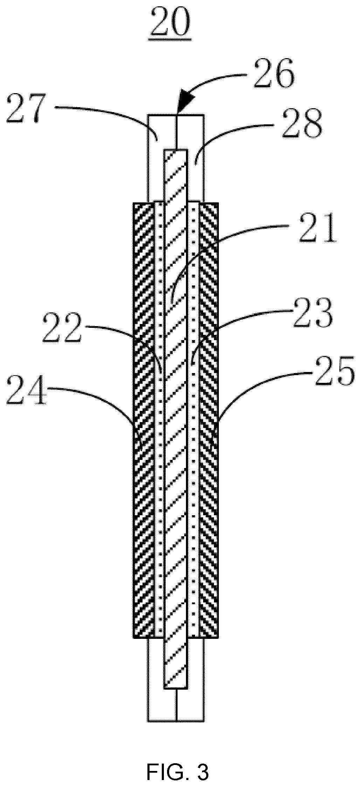

According to an example of the present application, the cathode porous transport layer 14, the bipolar plate (or monopole plate), and the anode porous transport layer 13 may be formed as an integral mechanical portion 10, as shown in FIG. 2, and the exchange membrane 21, the anode catalyst layer 22, the cathode catalyst layer 23, the anode gas diffusion electrode 24, and the cathode gas diffusion electrode 25 may be formed as an integral electrochemical portion 20, as shown in FIG. 3.

In this way, the mechanical portion 10 and the electrochemical portion 20 of the electrolytic unit 50 may form an integral component, respectively. During the manufacturing of the electrolytic unit 50, the stronger and more rigid mechanical portion 10 may be manufactured separately from the more fragile and flexible electrochemical portion 20 as an integral component before being assembled together, thus facilitating assembly. In addition, the manufacturing process may be optimized according to the different properties of the mechanical portion 10 and the electrochemical portion 20. For example, during the manufacturing process of the electrochemical portion 20, a more precise and gentler action than that in the manufacturing of the mechanical portion 10 may be used. Further, the electrochemical portion 20 formed as an integral component may have greater rigidity than each component contained therein, and thus be more easily manipulated in assembly. During the use of the electrolytic unit 50, the mechanical portion 10 is less susceptible to damage and can therefore be used for a long time, while the electrochemical portion 20 is prone to failure or damage and needs to be replaced. As the electrochemical portion 20 is formed as an integral component, it is easier to disassemble, replace, and re-assembly. Therefore, according to the technical solution of the present application, the manufacturability, maintenance, reliability, and cost-efficiency of the electrolytic unit and the electrolytic stack can be improved.

It should be noted that the terms "integral" and "integrity" as used herein represent at least two components to be connected or integrated as a whole in a manner that is not detachable without breaking either component.

Specific structures of the mechanical portion 10 and the electrochemical portion 20 of the electrolytic unit 50 according to an example of the present application are described in detail below with reference to FIGS. 2 and 3.

FIG. 2 shows a schematic cross-sectional view of the mechanical portion 10 of the electrolytic unit 50. The mechanical portion 10 includes an anode plate 11, a cathode plate 12, an anode porous transport layer 13, and a cathode porous transport layer 14. The anode plate 11 and the cathode plate 12 form a bipolar plate by, for example, welding, bonding, etc., and a coolant channel 16 is formed between the anode plate 11 and the cathode plate 12. The anode porous transport layer 13 and the cathode porous transport layer 14 are in contact with the anode plate 11 and the cathode plate 12, respectively. As previously noted, the anode plate 11 and the cathode plate 1212 may also be replaced by a monopole plate. As shown in FIG. 2, the mechanical portion 10 remains integral by a rubber piece 15 formed around the perimeter of each of the cathode porous transport layer 14, the bipolar plate (or monopole plate), and the anode porous transport 27 layer 13. The rubber piece 15 may be formed by injection molding at the perimeter described above by any of ethylene propylene diene monomer (EPDM) rubber, silicon rubber, fluororubber, and chloroprene rubber, thereby securely holding the porous transport layer and the bipolar plate (or monopole plate) together. It should be noted that FIG. 2 shows a cross-sectional view of the mechanical portion 10, with the rubber piece 15 shown as being positioned on both the upper and lower ends of the bipolar plate (or monopole plate), whereas the rubber piece 15 may actually be disposed around the bipolar plate (or monopole plate). It is also to be noted that the present application is not limited to forming the various components of the mechanical portion 10 as one by a rubber piece, but may also employ welding, locking members, etc. However, the rubber piece can not only integrate the various components of the mechanical portion 10 into an integral component, but also provide sealing when assembled with the electrochemical portion 20 together and provide electrical insulation from adjacent electrolytic units, thus further simplifying the structure and assembly process.

FIG. 3 shows a schematic cross-sectional view of the electrochemical portion 20 of the electrolytic unit 50. The electrochemical portion 20 includes an anode catalyst layer 22 and a cathode catalyst layer 23 attached to two sides of the exchange membrane 21, and an anode gas diffusion electrode 24 and a cathode gas diffusion electrode 25 attached to the anode catalyst layer 22 and the cathode catalyst layer 23, respectively. As shown in FIG. 3, the electrochemical portion 30 may be held as integral by a sealing gasket 26 formed around the perimeter of each of the anode gas diffusion electrode 24, the anode catalyst layer 22, the exchange membrane 21, the cathode catalyst layer 23, and the cathode gas diffusion electrode 25. The sealing gasket 26 may not only integrate the various components of the electrochemical portion 20 into an integral component, but also provide sealing when assembled with the mechanical portion 10 and provide an electrical insulation from an adjacent electrolytic unit. In addition, there is no need to provide a separate gasket or sealing frame, so the assembly process can be further simplified.

As shown in FIG. 3, the sealing gasket 26 may include a first sub-sealing gasket 27 and a second sub-sealing gasket 28 disposed on two sides of the exchange membrane 21, respectively, and the first sub-sealing gasket 27 and the second sub-sealing gasket 28 are in contact with each other. By forming the sub-sealing gasket on the two sides of the exchange membrane 21, respectively, a reliable attachment can be formed on both sides of the exchange membrane 21 in a simple manner. It should be noted that FIG. 3 shows a cross-sectional view of the electrochemical portion 20, with the sealing gasket 26 being considered to be positioned on both the upper and lower ends of the exchange membrane 21, whereas the sealing gasket 26 is actually disposed around the exchange membrane 21. In addition, it should also be noted that the sealing gasket 26 shown in FIG. 3 is shown as being attached only to both sides of the exchange membrane 21, while the sealing gasket 26 may further extend inwardly to be attached partially to the outer sides of the anode gas diffusion electrode 24 and cathode gas diffusion electrode 25. It will be understood that the present application is not limited to the above described sealing gasket structure, but instead may employ any sealing structure that can integrate the exchange membrane, the catalyst layer, and the gas diffusion electrode as an integral component. For example, the first sub-sealing gasket 27 and the second sub-sealing gasket 28 may be formed as one. The first sub-sealing gasket 27 and the second sub-sealing gasket 28 may be made of, for example, PVC, polycarbonate, ABS, silicone, polyurethane, etc.

With reference back to FIG. 1, the electrolytic unit 50 may be configured such that the anode porous transport layer 13 of the mechanical portion 10 is in contact with the anode gas diffusion electrode 24 of the electrochemical portion 20. Alternatively, the electrolytic unit 50 may also be configured such that the cathode porous transport layer 14 of the mechanical portion 10 is in contact with the cathode gas diffusion electrode 25 of the electrochemical portion 20. Specifically, the electrolytic unit 50 may be assembled by abutting the rubber piece 15 of the mechanical portion 10 and the sealing gasket 26 of the electrochemical portion 20 together.

Upon assembly of the electrolytic stack 100, a plurality of electrolytic units 50 may be arranged adjacent to one another such that the mechanical portion 10 of one of the two electrolytic units 50 arranged adjacently is in contact with the electrochemical portion 20 of the other electrolytic unit. The rubber piece 15 and the sealing gasket 26 of the adjacently arranged electrolytic units 50 may then be clamped by a first end plate 30 and a second end plate 40 to form a plurality of electrochemical reaction chambers within the electrolytic stack. It should be noted that ports may be provided in the rubber piece 15 and the sealing gasket 26 in communication with the ports described above for supplying water and coolants to the electrolytic unit 50. In addition, the electrolytic stack 100 may also include, for example, a housing, a power supply device, a control device, etc.

In accordance with the examples of the present application, the mechanical portion and the electrochemical portion of the electrolytic unit may be formed as an integral component, respectively, before being assembled together for ease of manufacture and later maintenance.
The present application has been described in detail in conjunction with specific examples. It is evident that the above description and the examples illustrated in the accompanying drawings are all to be understood as exemplary and not as limiting the present application. Those skilled in the art may make various modifications or alterations without departing from the spirit of the present application, and such modifications or alterations are not to be excluded from the scope of the present application.

## Claims

1. An electrolytic unit (50), comprising:
a plate having a first side and a second side opposite each other, the first side being an anode side, and the second side being a cathode side;
an anode porous transport layer (13) and a cathode porous transport layer (14) respectively disposed at the first side and the second side;
an exchange membrane (21);
an anode catalyst layer (22) and a cathode catalyst layer (23) respectively disposed on two sides of the exchange membrane (21);
an anode gas diffusion electrode (24) positioned on the anode catalyst layer (22); and
a cathode gas diffusion electrode (25) positioned on the cathode catalyst layer (23);
wherein the cathode porous transport layer (14), the plate and the anode porous transport layer (13) are formed as an integral mechanical portion (10), and the anode gas diffusion electrode (24), the anode catalyst layer (22), the exchange membrane (21), the cathode catalyst layer (23), and the cathode gas diffusion electrode (25) are formed as an integral electrochemical portion (20).

2. The electrolytic unit (50) according to Claim 1, wherein the mechanical portion (10) is maintained integral by a rubber piece (15) formed around a perimeter of each of the cathode porous transport layer (14), the plate, and the anode porous transport layer (13).

3. The electrolytic unit (50) according to Claim 1 or 2, wherein the electrochemical portion (20) is maintained integral by a sealing gasket (26) formed around a perimeter of each of the anode gas diffusion electrode (24), the anode catalyst layer (22), the exchange membrane (21), the cathode catalyst layer (23), and the cathode gas diffusion electrode (25).

4. The electrolytic unit (50) according to Claim 2, wherein the rubber piece (15) is formed by injection molding at the perimeter by any of ethylene propylene diene monomer rubber, silicone rubber, fluororubber, and chloroprene rubber.

5. The electrolytic unit (50) according to Claim 3, wherein the mechanical portion (10) and the electrochemical portion (20) are configured to be capable of being adjacent to each other such that the anode porous transport layer (13) of the mechanical portion (10) is in contact with the anode gas diffusion electrode (24) of the electrochemical portion (20), or such that the cathode porous transport layer (14) of the mechanical portion (10) is in contact with the cathode gas diffusion electrode (25) of the electrochemical portion (20).

6. The electrolytic unit (50) according to Claim 1, wherein the plate is disposed as a bipolar plate comprising an anode plate (11) and a cathode plate (12) disposed adjacent to each other, a coolant channel (16) formed between the anode plate (11) and the cathode plate (12).

7. The electrolytic unit (50) according to Claim 3, wherein the sealing gasket (26) includes a first sub-sealing gasket (27) and a second sub-sealing gasket (28) disposed on two sides of the exchange membrane (21), respectively, and the first sub-sealing gasket (27) and the second sub-sealing gasket (28) are in contact with each other or formed integrally with each other.

8. The electrolytic unit (50) according to Claim 1, wherein the exchange membrane is a proton exchange membrane or an anion exchange membrane.

9. An electrolytic stack (100), wherein the electrolytic stack (100) comprises:
a plurality of electrolytic units (50) according to any one of claims 1 to 8 arranged adjacently;
a first end plate (30) and a second end plate (40), the first end plate (30) and the second end plate (40) configured to clamp the plurality of the electrolytic units (50) together such that the mechanical portion (10) of one of the two electrolytic units (50) arranged adjacently is in contact with the electrochemical portion (20) of the other of the two electrolytic units (50).

10. The electrolytic stack (100) according to Claim 9, wherein the first end plate (30) is provided with one or more of inlets (31, 33) for supplying water or a basic solution to the cathode side and the anode side of the electrolytic unit (50), respectively, a coolant inlet (35) for supplying a coolant to the coolant channel (16) of the electrolytic unit (50), a hydrogen outlet (32) for discharging hydrogen gas generated on the cathode side of the electrolytic unit (50), an oxygen outlet (34) for discharging oxygen gas generated on the anode side of the electrolytic unit (50), and a coolant outlet (36) for discharging the coolant.
